# EUROPÄISCHE PATENTSCHRIFT

(11) **EP 1 504 875 B1**
(45) Veröffentlichungstag und Bekanntmachung des Hinweises auf die Patenterteilung: **12.12.2007**
(21) Anmeldenummer: 04102843.2
(22) Anmeldetag: 21.06.2004
(51) Int. Cl.: B29C 47/42, B29C 47/40, B29C 47/38

(54) **Austauschbares Walzenteil**
Exchangable screw part
Section de vis échangeable

(30) Priorität: 06.08.2003 DE 10336371; 28.11.2003 DE 10356356
(43) Veröffentlichungstag der Anmeldung: 09.02.2005
(73) Patentinhaber: Battenfeld Extrusionstechnik GmbH, 32547 Bad Oeynhausen (DE)
(72) Erfinder: Roth, Michael, 32549 Bad Oeynhausen (DE); Brandt, Rolf, 32257 Bünde (DE)

(56) Entgegenhaltungen:
- DE-A- 2 521 774
- DE-A- 2 905 717
- DE-U- 8 911 796
- DE-U- 29 818 525
- US-A- 3 825 236
- US-A- 4 289 409
- PATENT ABSTRACTS OF JAPAN Bd. 0100, Nr. 33 (M-452), 8. Februar 1986 (1986-02-08) -& JP 60 189416 A (ISHINAKA TEKKOSHO:KK), 26. September 1985 (1985-09-26)

## Beschreibung

Planetwalzenextruder mit mindestens einem Walzenteil, wobei das Walzenteil aus einem Außensegment, einem innenverzahnten Walzenzylinder, einer angetriebenen Hauptspindel sowie mehreren um die Hauptspindel angeordneten Planetspindeln gebildet wird, wobei das Walzenteil beidseitige Anschlußbereiche aufweist.

Bekannt sind für das System Planetwalzenextruder (PWE) in sogenannter modularer Ausführung, wobei die Modularität sich darauf bezieht, daß Walzenteile bei der Konzeption bzw. Auslegung mit unterschiedlicher Walzenteillänge, geteilt oder ungeteilt, mit Möglichkeiten der Entgasung oder Einspritzung und anderen Prozessvarianten ausgestattet werden. Ein Beispiel für einen derartig aufgebauten Extruder mit mehreren Planetwalzenteilen zeigt die DE-A-25 21 774**.**

Die Modularität bezieht sich dabei aber nicht darauf, daß einzelne Segmente eines Walzenteils untereinander ausgestattet sind. Besonders auch nicht darauf, daß Walzenteile drehbar sind, das heißt, daß der Einlauf und Auslauf eines jeden Walzenteilsegments gleich gestaltet sind. Dies würde aber sicherstellen, daß Montage, Handhabung und Lebenszeitverlängerung wesentlich verbessert werden.

Der wesentliche Nachteil der oben beschriebenen Ausführung ist, daß die bisher bekannten und ausgeführten Walzenteile nicht kompatibel sind. Das heißt, daß insbesondere nach der Konzeption bzw. Auslegung die einzelnen Teile des Walzenteils untereinander nicht tauschbar ausgeführt sind. Wünschenswert wäre aber, daß einzelne Segmente besonders bei wechselnder Verfahrensaufgabe oder unterschiedlich fortgeschrittenem Verschleiß von einzelnen Segmenten absolut austauschbar wären. Vorteile würden sich zudem für die Montage ergeben, indem Teile nicht mehr seitenverkehrt montiert werden können.

Die **Aufgabe** der Erfindung ist es, die bisherige Konstruktion bzw. das dahinterstehende Konzept derart umzugestalten, um die absolute Modularität sicherzustellen.

Die **Lösung** der Aufgabe ist in Verbindung mit dem Oberbegriff des Anspruches 1 dadurch gekennzeichnet, daß die Anschlussbereiche zueinander um eine einen rechten Winkel zur Extrusionsrichtung bildende Symmetrieachse symmetrisch sind, wobei die Anschlussbereiche die Kontaktflächen an der Stirnseite des Walzenzylinders sind.

Dies führt insbesondere auch zu einer absoluten Freiheit bei der Zusammenstellung von Einzelkomponenten und deren Positionierung im Verlauf des Walzenteils.

Mehrere solcher Elemente können mittels eines Verbindungsringes verbunden werden. Auch diese Verbindungsringe sind wiederum gleich aufgebaut, so daß eine falsche Einbaulage verhindert wird.

Am Ende in Extrusionsrichtung betrachtet ist ein Abschlußring angeordnet, der wiederum in Bezug auf das Walzenteil im entsprechenden Bereich die gleiche Geometrie aufweist, wie die Verbindungsringe.

Die Verbindungsringe können im Innendurchmesser variiert werden, so daß die Funktion der bekannten Stau- oder Dispergierringe ermöglicht wird. Die Verbindungsringe weisen auch bei verschiedenen Planetwalzenextruderbaugrößen die gleiche Breite auf, so daß auch Planetspindeln innerhalb verschiedener Planetwalzenextruderbaugrößen in Zukunft austauschbar sind. Ein Planetwalzenextruder mit durchgehenden Planetspindeln kann auch bei geteilten Walzenzylindern realisiert werden, indem der Verbindungsring im Innendurchmesser die für die Planetwalzenextruder typische schräg verzahnte Innenverzahnung aufweist.

Die Walzenteile sind im äußeren Bereich derart gestaltet, daß der äußerliche Zugang zum Verbindungsring möglich wird. Damit ist sichergestellt, daß die Verbindungsringe auch als Kombinationsringe ausgeführt werden können. Es ist somit möglich, über die Verbindungsringe eine Entgasung oder auch eine Farbmittelzugabe zu gewährleisten.

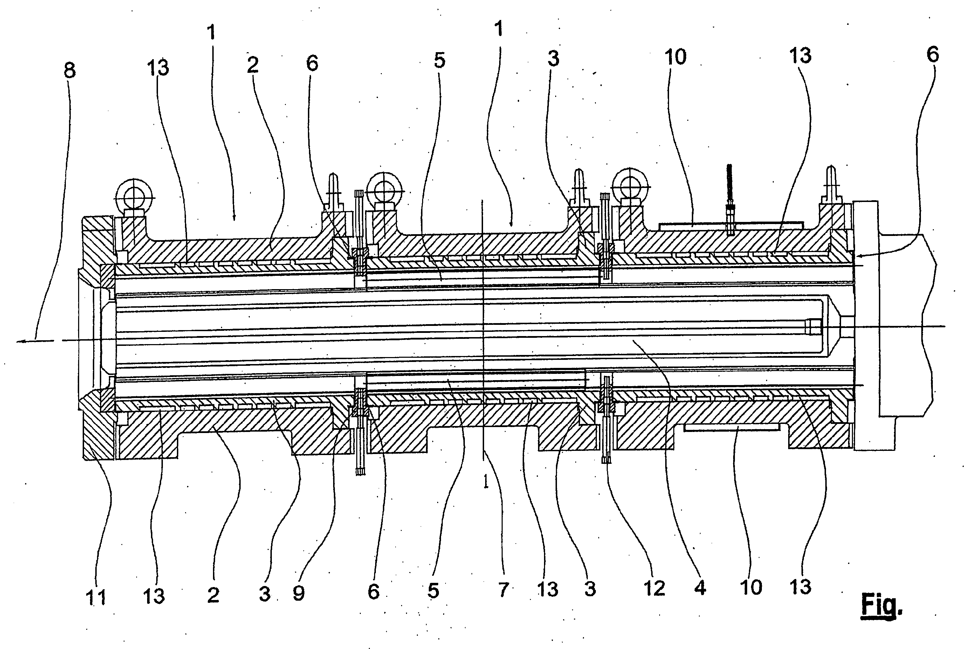

In der Zeichnung ist schematisch ein Beispiel dargestellt, es zeigt die Figur einen Planetwalzenextruder mit mehreren Walzenteilen 1, die über Verbindungsringe 9 zusammengesetzt sind. Jedes Walzenteil 1 besteht aus einem Außensegment 2 und einem innenverzahnten Walzenzylinder 3. Alle drei hier dargestellten Walzenteile 1 haben eine gemeinsame Hauptspindel 4. In jedem Walzenteil 1 sind um die Hauptspindel 4 Planetspindeln 5 angeordnet, hier nur im mittleren Walzenteil dargestellt. Jedes Walzenteil weist einen Bereich 6 auf, an dem der Verbindungsring 9 zur Anlage kommt. Dieser Bereich 6 jeden Walzenteiles ist über die Symmetrieachse 7 symmetrisch, wobei die Symmetrieachse 7 rechtwinklig zur Extrusionsrichtung 8 ist. Es ist somit möglich, das Walzenteil 1 komplett auszutauschen oder beispielsweise nur den Walzenzylinder 3 zu wechseln. Durch den symmetrischen Bereich 6 ist die Einbaulage irrelevant, da die Anschlußgeometrie zu dem Verbindungsring 9 in jedem Punkt identisch ist. Somit ist selbst die Position, sprich die Lage eines Walzenteils in Extrusionsrichtung variabel. Das erste Walzenteil kann beispielsweise durch das dritte Walzenteil getauscht werden, denn auch die Anschlußmaße sind im Bereich 6 des Walzenteils passend zum Abschlußring 11. In den Verbindungsringen 9 sind Stifte 12 angeordnet, die beispielsweise zur Entgasung oder zum Aufstauen der Schmelze dienen können. Am ersten Walzenteil ist beispielhaft ein Heizelement 10 angeordnet. Hiermit wird es möglich, die Temperierung 13, die hier als Wasserkreislauf dargestellt ist, zu beeinflussen. Es ist zum Beispiel denkbar, mittels des Heizelementes 10 das Walzenteil 1 zu erwärmen und bei Auftreten einer zu hohen Temperatur mittels des Wasserkreislaufs 13 das Walzenteil 1 schnell zu kühlen, um eine Überhitzung des Materials zu verhindern. Selbstverständlich ist es auch denkbar, die Heizelemente 10 an den anderen Walzenteilen 1 anzubringen. Das Heizelement 10 steht auch über die dargestellten Anschlußelemente mit der Maschinensteuerung in Verbindung, wodurch eine exakte Temperaturregelung ermöglicht wird.

Die beschriebene und in der Figur beispielhaft dargestellte Erfindung verbindet alle Möglichkeiten eines modernen Planetwalzenextrudersystems. Das Planetwalzensystem ist absolut modular aufgebaut, die einzelnen Walzenteile sind dreh- und austauschbar und mittels der Heizelemente ist eine verbesserte Temperaturführung möglich.

### Bezugszeichenliste:

- 1: Walzenteil
- 2: Außensegment
- 3: Walzenzylinder
- 4: Hauptspindel
- 5: Planetenspindel
- 6: symmetrischer Bereich an 1
- 7: Symmetrieachse
- 8: Extrusionsrichtung
- 9: Verbindungsring
- 10: Temperierelement
- 11: Abschlußring
- 12: Stift
- 13: Kühlkreislauf

## Patentansprüche

1. Planetwalzenextruder mit mindestens einem Walzenteil (1), wobei
das Walzenteil (1) aus einem Außensegment (2),
einem innenverzahnten Walzenzylinder (3),
einer angetriebenen Hauptspindel (4) sowie mehreren um die Hauptspindel (3) angeordneten Planetspindeln (5) gebildet wird,
wobei das Walzenteil (1) beidseitig Anschlußbereiche (6) aufweist,
**dadurch gekennzeichnet, dass**
die Anschlussbereiche (6) zueinander um eine einen rechten Winkel zur Extrusionsrichtung (8) bildende Symmetrieachse (7) symmetrisch sind,
wobei die Anschlussbereiche (6) die Kontaktflächen an der Stirnseite des Walzenzylinders (3) sind.

2. Planetwalzenextruder nach Anspruch 1, **dadurch gekennzeichnet, dass** mehrere Walzenteile (1) mittels eines Verbindungsringes (9) verbindbar sind.

3. Planetwalzenextruder nach Anspruch 2, **dadurch gekennzeichnet, dass** der Verbindungsring (9) im Anschlussbereich (6) am Walzenteil (1) anliegt.

4. Planetwalzenextruder nach Anspruch 3, **dadurch gekennzeichnet, dass** der Verbindungsring (9) mit einer Innenverzahnung ausgeführt ist.

5. Planetwalzenextruder nach Anspruch 3, **dadurch gekennzeichnet, dass** der Verbindungsring (9) als Kombinationsring ausgeführt ist.

6. Planetwalzenextruder nach einem der vorigen Ansprüche, **dadurch gekennzeichnet, dass** mindestens ein Walzenteil (1) mit einem elektrisch steuer- oder regelbaren Temperierelement (10) versehen ist.

7. Planetwalzenextruder nach Anspruch 6, **dadurch gekennzeichnet, dass** das Temperiermittel (10) ein Heizelement ist.

## Claims

1. Planetary gear extruder having at least one roller part (1), wherein the roller part (1) is formed from an outer segment (2), an inner-toothed roller cylinder (3), a driven main spindle (4) and several planetary gear spindles (5) arranged around the main spindle (3), wherein the roller part (1) has connection regions (6) on both sides, **characterised in that** the connection regions (6) are symmetrical to one another about an axis of symmetry (7) forming a right-angle to the extrusion direction (8), wherein the connection regions (6) are the contact surfaces on the end-face side of the roller cylinder (3).

2. Planetary gear extruder according to claim 1, **characterised in that** several roller parts (1) can be connected by means of a connecting ring (9).

3. Planetary gear extruder according to claim 2, **characterised in that** the connecting ring (9) rests on the roller part (1) in the connection region (6).

4. Planetary gear extruder according to claim 3, **characterised in that** the connecting ring (9) is made with inner toothing.

5. Planetary gear extruder according to claim 4, **characterised in that** the connecting ring (9) is made as a combination ring.

6. Planetary gear extruder according to one of the previous claims, **characterised in that** at least one roller part (1) is provided with an electrically controllable or regulatable tempering element (10).

7. Planetary gear extruder according to claim 6, **characterised in that** the tempering means (10) is a heating element.

## Revendications

1. Extrudeuse planétaire comportant au moins une partie de laminage (1), cette partie de laminage (1) étant formée d'un segment extérieur (2), d'un cylindre de laminage à denture intérieure (3), d'une broche principale entraînée (4) et de plusieurs broches planétaires (5) placées autour de cette broche principale (3), la partie de laminage (1) présentant des zones de raccordement (6) des deux côtés,
**caractérisée par le fait que**
les zones de raccordement (6) sont symétriques les unes des autres autour d'un axe de symétrie (7) perpendiculaire à la direction d'extrusion (8), les zones de raccordement (6) étant les surfaces de contact sur le côté frontal du cylindre de laminage (3).

2. Extrudeuse planétaire selon la revendication 1, **caractérisée par le fait que** plusieurs parties de laminage (1) peuvent être assemblées au moyen d'une bague d'assemblage (9).

3. Extrudeuse planétaire selon la revendication 2, **caractérisée par le fait que** la bague d'assemblage (9) s'appuie dans la zone de raccordement (6) sur la partie de laminage (1).

4. Extrudeuse planétaire selon la revendication 3, **caractérisée par le fait que** la bague d'assemblage (9) est pourvue d'une denture intérieure.

5. Extrudeuse planétaire selon la revendication 3, **caractérisée par le fait que** la bague d'assemblage (9) est une bague composite.

6. Extrudeuse planétaire selon l'une des revendications précédentes, **caractérisée par le fait qu'**au moins une partie de laminage (1) est pourvue d'un élément de tempérage (10) commandé ou régulé électriquement.

7. Extrudeuse planétaire selon la revendication 6, **caractérisée par le fait que** le moyen de tempérage (10) est un élément chauffant.
